# EUROPÄISCHE PATENTSCHRIFT

(11) **EP 0 596 419 B1**
(45) Veröffentlichungstag und Bekanntmachung des Hinweises auf die Patenterteilung: **16.04.1997**
(21) Anmeldenummer: 93117539.2
(22) Anmeldetag: 29.10.1993
(51) Int. Cl.: F16K 1/34, F16K 27/02, F16K 15/02

(54) **Ventil, insbesondere für eine Vollschlauchkupplung**
Valve, especially for a hose coupling
Soupape, en particulier pour un accouplement à boyaux

(30) Priorität: 31.10.1992 DE 4236858
(43) Veröffentlichungstag der Anmeldung: 11.05.1994
(73) Patentinhaber: F.A. SENING GMBH, D-22525 Hamburg (DE)
(72) Erfinder: Morgenstern, Erich, D-22089 Hamburg (DE)
(74) Vertreter: Meyer, Ludgerus A., Dipl.-Ing.

(56) Entgegenhaltungen:
- AT-B- 303 473
- AT-B- 378 586
- DE-A- 2 413 248
- DE-B- 1 675 420
- DE-C- 1 001 071
- FR-A- 2 039 459
- GB-A- 1 082 748
- US-A- 3 051 196

## Beschreibung

Die Erfindung betrifft ein Ventil, insbesondere für eine Vollschlauchkupplung, mit einem Gehäuse, einem Ventilschaft und einem, mit einem umlaufenden Vorsprung versehenen Ventilteller, wobei zwischen Ventilteller und einem Absatz des Gehäuses eine ringförmige Dichtung vorgesehen ist, die von einem Abdeckring am Gehäuse gesichert ist, bei den ferner zur Festlegung einer definierten axialen Stellung des geschlossenen Ventils der radial gerichtete Vorsprung des federbelasteten Ventiltellers in Axialrichtung des geschlossenen Ventils auf dem Absatz des Gehäuses aufliegt, die Dichtung in einer umlaufenden stirnseitigen Nut des Absatzes angeordnet ist, und nur ein Teil der Dichtung mit dem bündig auf dem Gehäuseabsatz aufliegenden Vorsprung des Ventiltellers des geschlossenen Ventils in Kontakt kommt.

Das Ventil dient insbesondere zum Befüllen von Tankwagen. Es ist als Tellerventil mit einem Gehäuse, einem Ventilteller und einem Ventilschaft ausgebildet, wobei der Ventilteller federbelastet ist.

Es ist bekannt, Tellerventile als steuerbare Absperrorgane für Vollschlauchkupplungen zu verwenden. Der Rand des Ventiltellers ist in der Regel kegelig ausgebildet und sitzt im entsprechend geformten Ventilsitz zum Verschluß des Ventils. Er wird dort durch eine Druckfeder gehalten.

Die äußere Form eines Ventils für eine Vollschlauchkupplung ist durch die Norm API RP 1004 festgelegt. Zur Öffnung eines solchen Ventils bei der Befüllung eines Tankwagens wird eine Schlauchkupplung an das Ventil angesetzt, die einen flachen, runden Teller aufweist, der durch einen Stößel betätigt wird und der gegen den Ventilteller drückt, so daß sich das Ventil entgegen seiner Federbelastung öffnet. Der Ventilteller und der Ventilsitz weisen in der Regel eine Kegelpaarung auf, die durch O-Ringe im Kegel zusätzlich abgedichtet ist.

Es hat sich bei dieser Ventilart als schwierig erwiesen, den Kegelsitz im Ventilgehäuse genau zu definieren. Dies liegt zum einen darin begründet, daß eine Kegelpaarung mit exaktem Sitz sehr kompliziert in der Herstellung ist, und zum anderen darin, daß die als Dichtung verwendeten O-Ringe bei Kontakt mit Mineralölen quellen, und zwar unterschiedlich stark, je nachdem, welche Mineralöladditive dem Füllprodukt zugesetzt sind. Dies führt zu einer ungenauen Kegelpaarung, wenn das Ventil wieder geschlossen wird. Es ist aber wünschenswert, den Ventilsitz möglichst genau zu definieren, denn normgemäß darf die vordere Tellerfläche nicht über die Normkante des Ventilgehäuses vorspringen, sondern sollte bündig abschließen oder möglichst wenig nach innen zurückspringen. Je weiter die Tellerfläche nach innen zurückspringt, desto größer ist der Raum, in dem sich nach Befüllen eines Tankwagens Produkt sammelt, und desto mehr Produkt wird nach Entkuppeln des Schlauchs ungehindert zu Boden fließen können.

Ein weiteres Problem entsteht durch die Abnutzung der Normkante, die als Dichtfläche zur Gegenkupplung fungiert, wodurch es zu Undichtigkeiten beim Kuppeln kommen kann.

Das Wechseln des Anschlußringes ist oft schwierig, da ein neuer Anschlußring nicht 100% zu dem bisherigen kegeligen Ventilteller paßt, so daß häufig das ganze Ventil ausgetauscht werden muß.

Aus der DE-AS 10 01 071 ist ein zweiteiliges Hochdruck-Rückschlagventil bekannt, das ein Gehäuse, einen Ventilschaft und einen Ventilteller aufweist. Der Ventilteller ist mit einer Art Vorsprung versehen. Auf einem Gehäuseabsatz verläuft eine ringförmige Dichtung, die als Flachdichtscheibe ausgebildet ist. Der Ventilteller ist federbelastet und ein Teil der Flachdichtscheibe ist von einem Abdeckring am Gehäuse gesichert.

Dieses Ventil verwendet zwei versetzte Kegel, von denen die im Durchmesser kleinere Kegelfläche im Kegelsitz aufliegt und die im Durchmesser größere Kegelfläche die Abdichtung gegen die Dichtscheibe bewirkt. Der axiale Kegel sitz dieses Ventils läßt sich daher nur sehr schwer definieren.

Einerseits ist es kompliziert und dementsprechend aufwendig, eine Kegelpaarung mit exaktem Sitz herzustellen und andererseits führen Abnutzungen der Kegel während des Gebrauchs ebenfalls zu einer ungenauen Kegelpaarung. Die Folge ist ein hoher Flüssigkeitsverlust bei der Ankupplung eines Schlauches.

Ein Ventil gemäß dem Oberbegriff des Anspruchs 1 ist aus der US-A-3051196 bekannt. Dort übergreift der Abdeckring nahezu die Hälfte der Dichtung.

Der Vorsprung des Ventiltellers, der einen ringförmigen in Axialrichtung gerichteten Ansatz aufweist, liegt in geschlossener Stellung des Ventiltellers so auf dem nicht vom Abdeckring abgedeckten Teil der Dichtung auf, daß die Dichtung dadurch nahezu vollständig eingeschlossen ist. Eine Quellmöglichkeit der Dichtung, die bei Einsatz des Ventils bei Kraftstoffen wünschenswert ist, besteht dabei nicht.

Demgemäß ist es eine Aufgabe der vorliegenden Erfindung, ein Ventil vorzusehen, das einen dauerhaften und paßgenauen Sitz des Ventiltellers im Gehäuse vorsieht, wobei die Vorderseite auch dann nur wenig oder gar nicht von der Normkante des Gehäuses zurückspringt, wenn die Dichtung durch Kraftstoffkontakt gequollen ist.

Die Erfindung ist gemäß Anspruch 1 dadurch gekennzeichnet, daß die ebene Vorderseite des Ventiltellers bündig mit einer Normkante des Ventilgehäuses abschließt, daß derjenige Teil der Dichtung , der mit dem bündig auf dem Gehäuseabsatz aufliegenden Vorsprung des Ventiltellers des geschlossenen Ventils in Kontakt kommt und schmal gegenüber dem übrigen Teil der Dichtung ist, bei nicht geschlossenem Ventil über den Rand des Absatzes aus der Nut vorspringt. und daß die Nut derart bemessen ist, daß eine Dehungsmöglichkeit der Dichtung aufgrund Quellung gegeben ist.

Bevorzugte Weiterbildungen der Erfindung sind in Unteransprüchen angegeben.

Bevor der vorzugsweise metallische Ventilteller in bündigen Schluß mit dem Gehäuseabsatz tritt, kommt er in Kontakt mit der Spitze einer Dichtung, die in einer bevorzugten Ausführungsform mit ihrer halben Dicke aus einer umlaufenden Nut herausragt. Die Nut ist in dem Absatz des Gehäuses angeordnet und bietet ausreichend Platz für den Dichtungskörper. Auch bei bündigem Abschluß steht der Ventilteller lediglich mit der Spitze der Dichtung in Kontakt. Der restliche Dichtungskörper erstreckt sich in der Nut radial in Richtung der Außenseite des Gehäuses. Dabei läßt die Nut der Dichtung ausreichend Platz zum Quellen. Zum Innenraum des Gehäuses hin liegt die Dichtung mit ihrer Spitze an dem Vorsprung des Ventiltellers an, während der in der Nut liegende Dichtungskörper von einem Ring, insbesondere einem Stahlring, abgedeckt ist. Der Stahlring kann durch Schrauben in seiner Position festgehalten werden.

Zur Befüllung eines Tankwagens wird ein Vollschlauch an das Ventil angekuppelt, indem ein Kupplungsteil des Schlauchs um einen Vorsprung der genormten Außenform des Ventils gelegt wird. Dabei drückt ein im Schlauch befindlicher, ebenfalls genormter flacher Teller gegen den Ventilteller und drückt ihn in seine geöffnete, zweite Schaltstellung. Ein Flüssigkeitsstrom kann so stattfinden. Durch die Strömung können an den Innenflächen des Gehäuses Wirbel und damit verbunden Unterdruck entstehen. Die erfindungsgemäße Dichtung ist durch den Stahlring jedoch fest in ihrer Position verankert. Obgleich die der Flüssigkeit beigemischten Mineralöladditive jede Dichtung mehr oder weniger stark quellen lassen, quillt die erfindungsgemäß angeordnete Dichtung im wesentlichen mit ihrem dickeren Körperbereich, jedoch nur vernachlässigbar gering an der schmalen Spitze.

Nach beendeter Befüllung des Tanks wird der Schlauch abgekuppelt, der Ventilteller wird durch die Feder in seinen Ventilsitz zurückgedrückt. Der Abstand des Absatzes im Gehäuse von der Vorderseite des Ventiltellers ist dabei so definiert, daß der Ventilteller im geschlossenen Zustand genau mit der Normkante abschließt oder nur geringfügig nach innen zurückspringt. Da er beim Schließen nur mit der wenig gequollenen Spitze der Dichtung in Berührung kommt, wird diese den genau definierten Abstand nicht beeinflussen. Dadurch wird die Menge an Restprodukt, z. B. Restkraftstoff, das sich in dem Raum sammelt, der sich zwischen der Normkante und dem Ventilteller befindet, so gering wie möglich gehalten. Da der Restkraftstoff nach Entkupplung des Vollschlauches ungehindert auf den Boden fließen kann, trägt eine Minimierung der Restkraftstoffmenge direkt zur Umweltentlastung bei.

Das Ventilgehäuse besteht des weiteren vorzugsweise aus zwei Gußteilen, einem befüllseitigen Ventilgehäuse und einem abgabeseitigen Anschlußring. Die beiden Teile können miteinander verschraubt sein oder durch ein Gewinde miteinander verbunden sein. Beide Verbindungen sind einfach lösbar, so daß sich der Anschlußring, der den Ventilteller enthält, zum Austausch abschrauben oder abdrehen läßt. Dies hat den Vorteil, daß zum Austausch eines beschädigten Anschlußringes nicht das gesamte Ventil ausgebaut werden muß, und daß die Dichtung ausgetauscht werden kann, ebenfalls ohne daß das gesamte Ventil ausgetauscht werden muß.

Eine bevorzugte Ausführungsform der vorliegenden Erfindung soll mit den folgenden Figuren näher erläutert werden. Dabei zeigen:
- Fig. 1: einen Längssschnitt durch ein Ventil für eine Vollschlauchkupplung mit der erfindungsgemäßen Dichtung,
- Fig. 2: eine Detaildarstellung der Dichtungsanordnung und
- Fig. 3: einen Querschnitt durch die Dichtung.

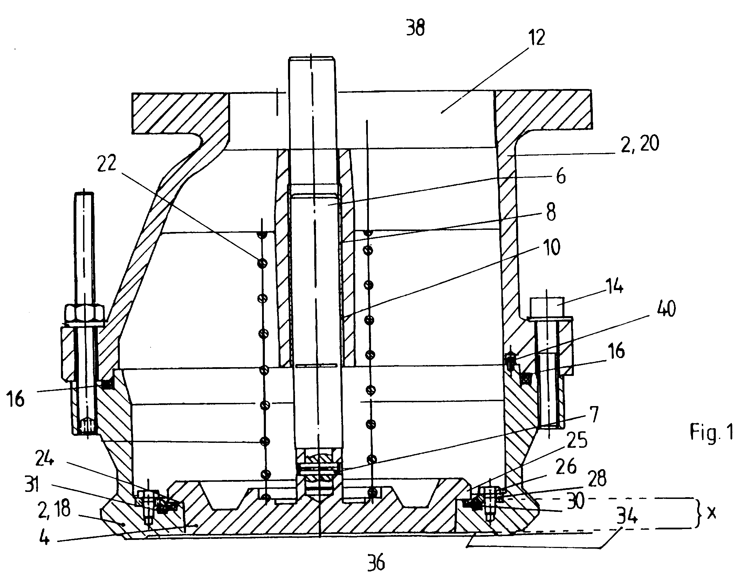

Fig. 1 zeigt einen Längsschnitt durch ein Ventil, insbesondere ein Ventil für eine Vollschlauchkupplung an einem Tankwagen. An dieses Ventil wird ein Vollschlauch angekuppelt, wenn der Tankwagen mit Produkt befüllt werden soll.

Das Ventil ist Teil eines Gehäuses 2, dessen Außenform insbesondere der Norm API RP 1004 für Ventilaußenformen entspricht. Am hinteren, abgabeseitigen Ende des Ventils ist ein Steg 12 angeordnet, durch den der Ventilschaft 6 paßgenau geführt ist. Der Steg 12 hält die Führung 8 für den Ventilschaft 6. Um eine einwandfreie Führung zu gewährleisten, befindet sich in der Führung 8 eine Führungsbuchse 10, in der der Ventilschaft 6 gleitet. Die Führung 8 und der Steg 12 sind vorzugsweise einstückig mit dem Gehäuse 2 ausgebildet.

Der Ventilschaft 6 ist axial zur Längsachse des Ventils ausgerichtet, und seine Länge entspricht in etwa der Länge des Ventils. Er endet am Ventilteller 4, mit dem er fest verbunden ist. Diese Verbindung erfolgt vorzugsweise durch einen Splint 7.

Der Ventilteller 4 ist flach und rund ausgebildet. Sein innerer Durchmesser, d.h. der Durchmesser der Ventiltellerfläche, die dem Innenraum des Ventils zugewandt und mit dem Ventilschaft verbunden ist, ist größer als sein vorderer Durchmesser, d.h. der Durchmesser der Ventiltellerfläche, die dem Vollschlauch zugewandt ist. Die Innenseite mit größerem Durchmesser verjüngt sich dabei nicht, wie beim Stand der Technik, kegelig zu der schmaleren Vorderseite, sondern bildet vielmehr einen Vorsprung 25. Der Durchmesser der Dichtungsseite des Ventils entspricht genau dem Innendurchmesser des Gehäuses 2 an der Befüllseite, während der Durchmesser der Innenseite des Ventiltellers 4 größer ist als der Innendurchmesser des Gehäuses 2, so daß das Innenteil des Ventiltellers 4 auf einem Absatz 24 des Gehäuses 2 zu liegen kommt.

Im Ruhestand befindet sich das Ventil aufgrund der Federkraft der Feder 22 in seiner geschlossenen Schaltstellung, d.h. der Ventilteller 4 befindet sich in der eben beschriebenen Position. Die Druckfeder 22 umfaßt die Führung 8 und liegt zwischen Steg 12 und Ventilteller 4.

Die Tiefe der Außenseite des Ventiltellers 4 ist genau definiert. Sie sollte vorzugsweise dem Abstand x zwischen der Innenkante des Gehäuses 2, die den Absatz 24 bildet und der Normkante 34 entsprechen oder allenfalls geringfügig kleiner sein. Die Normkante 34 ist in der Norm API RP 1004 festgelegt. Danach darf der Ventilteller 4 nicht über sie vorspringen, jedoch sollte er so wenig wie möglich nach innen von ihr zurückspringen, damit kein zu großer Raum entsteht, in dem sich Restprodukt sammeln kann.

Um das Ventil, insbesondere für eine Befüllung des Tankwagens zu öffnen, wird ein Vollschlauch an das Ventil gekuppelt, vorzugsweise, indem er mit Hilfe einer Schlauchkupplung über eine umlaufende Verdickung der genormten Ventilaußenform geklemmt wird. Die Schlauchkupplung ist ebenfalls genormt und weist in ihrem Inneren einen flachen runden Teller auf, der als Gegenstück zu dem Ventilteller 4 fungiert und diesen entgegen seiner Federbelastung aufdrückt, wenn der Vollschlauch an das Ventil gekuppelt wird. Die Dichtung mit dem Ventilgehäuse 2 erfolgt durch einen O-Ring.

Infolge der häufig sehr hohen Strömungsgeschwindigkeit der Flüssigkeit, die in den Wagen gefüllt wird, kommt es im Bereich des Gehäuseinnenraums des Ventils zu Wirbeln und damit verbunden an verschiedenen Stellen zu Unterdruck. Jedes im Gehäuseinnenraum befindliche Konstruktionsteil muß dementsprechend fest angeordnet sein. Besonders empfindlich sind hier leichtere Teile wie Dichtungen.

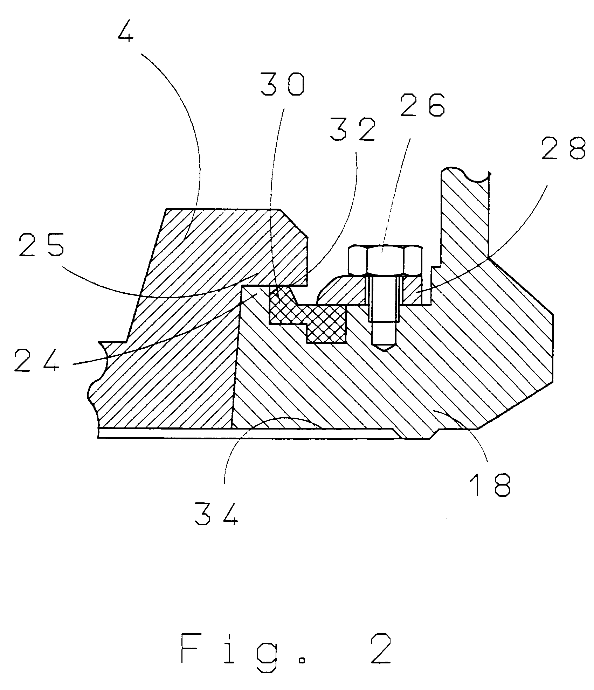

Bei der vorliegenden Ausführungsform der Erfindung (s. insbesondere Fig. 2) ist eine Dichtung 30 vorgesehen, deren Körper in einer umlaufenden Nut 31 liegt. Diese Nut 31 befindet sich in dem Absatz 24, der von dem Gehäuse 2 gebildet wird. Die Nut 31 weist ausreichend Platz auf für die Dichtung 30, auch wenn diese durch äußere Einflüsse gequollen ist. Die Dichtung 30 ist im Innenraum des Gehäuses 2 umlaufend angeordnet. Ein ebenfalls umlaufender Ring 28, vorzugsweise aus Stahl oder einem anderen korrosionsbeständigen Material, hält die Dichtung 30 in der Nut des Gehäuses 2 fest. Der Stahlring 28 wird seinerseits durch Schrauben 26 gegen das Gehäuse 2 festgezogen. Diese Konstruktion verhindert, daß die Dichtung 30 durch den von der Strömung erzeugten Unterdruck von ihrem Platz bewegt wird. Nur ein kleiner Teil der Dichtung 30, nämlich ungefähr die Hälfte ihrer Spitze 32, ragt über den Rand des Absatzes 24 in den Innenraum des Ventils in Richtung auf den Ventilteller. Der Durchmesser des Innenteils des Ventiltellers 4 ist im wesentlichen so groß, daß er auf dem Gehäuseabsatz 24 aufliegt und die Spitze 32 der Dichtung 30 abdeckt, jedoch nicht den restlichen Dichtungskörper. Sollte es während der Befüllung des Tankwagens zu einer Quellung der Dichtung 30 aufgrund der dem Produkt zugesetzten Mineralöladditive kommen, wird zwar der Dichtungskörper 30 quellen, aber dies wird ohne entscheidende Auswirkungen für den Verschluß des Ventiltellers 4 mit dem Absatz 24 des Gehäuses 2 bleiben, da der Ventilteller 4 lediglich mit der Spitze 32 der Dichtung 30 in Berührung tritt, bevor er eine scharfe Anlagekante mit dem Absatz 24 des Gehäuses 2 bildet.

Die Spitze 32 sollte dabei höchstens zur Hälfte aus dem Gehäuse 2 vorstehen.

Nach Abschluß der Befüllung wird das Ventil geschlossen, indem der als Gegenstück fungierende Teller des Vollschlauches zurückgezogen wird und der Ventilteller 4 durch die Feder 22 in die geschlossene Schaltstellung gedrückt wird. Der Vorsprung 25 schließt paßgenau mit dem Absatz 24 des Gehäuses 2 ab, ohne daß eine eventuelle Quellung der Dichtung 30 zu einer veränderten Lage führen könnte. Der Abstand x der Tiefe der Außenseite des Ventiltellers zur Normkante 34 ist so definiert, daß der Ventilteller 4 von der Normkante 34 nicht oder nur geringfügig zurückspringt und die vorher festgelegte Breite des Rücksprungs wird sich nach der Befüllung nicht verändern. Dadurch bleiben nach vollständigem Entfernen nur kleine Mengen Restprodukt, z. B. Restkraftstoff, in dem verbliebenen kleinen Raum zurück, so daß die Umweltbelastung verläßlich gering gehalten werden kann.

Ein weiterer Vorteil des Ventils gemäß der vorliegenden Erfindung ist die Ausbildung durch zwei lösbar miteinander verbundene Gußteile, die zusammen das Gehäuse bilden. Das hintere Gußteil 20 (Ventilgehäuse), d.h. das der Abgabeseite 38 zugewandte Teil, besteht vorzugsweise aus dem hinteren Gehäuseteil, dem Steg 12 und der Führung 8. Das vordere Gußteil 18 (Anschlußring), d.h. das der Befüllseite 36 zugewandte Teil, besteht aus dem vorderen Gehäuseteil, in das der Ventilteller 4 eingesetzt ist. Beide Teile sind vorzugsweise durch Verschraubung 14 oder ein Gewinde miteinander verbunden. Schrauben 14 halten beide Gußteile 18, 20 zusammen, ein O-Ring 16, der in eine umlaufende Nut eingesetzt ist, dichtet die Verbindung ab. Durch einen Gewindestift 40 erfolgt eine Zentrierung der Gußteile zueinander.

Diese lösbare Verbindung ermöglicht einen Austausch des Ventiltellers 4 oder der Dichtung 30, ohne daß das gesamte Ventil ausgebaut werden muß, indem lediglich das gut zugängliche vordere Gußteil 18 vom hinteren Gußteil 20 abgeschraubt oder abgedreht wird.

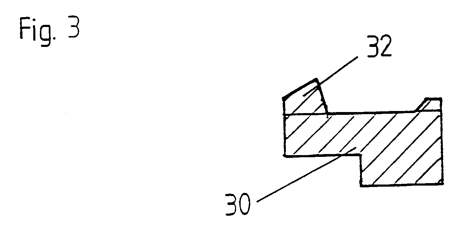

Fig. 3 zeigt den Querschnitt der Dichtung 30 an sich. Die Dichtung 30 liegt mit ihrem Grundkörper in einer umlaufenden Nut 31 im Absatz des Gehäuses und ist von einem Stahlring bedeckt. Die Dichtung läuft im Gehäuseabsatz einmal um den Innenraum des Ventils. Ihrer Form nach ist sie im Querschnitt rechteckförmig, wobei sie einen spitz zulaufenden Ansatz 32 aufweist, der in Richtung des Ventiltellers 4 weist. Im Bereich der Spitze 32 ist die Tiefe des Dichtungskörpers 30 geringer als in dem Bereich der Dichtung, der von dem Stahlring 28 bedeckt ist.

### Bezugszeichenliste

- 2: Gehäuse
- 4: Ventilteller
- 6: Ventilschaft
- 7: Splint
- 8: Führung
- 10: Führungsbuchse
- 12: Steg
- 14: Schraube
- 16: O-Ring
- 18: 1. Gußteil (Anschlußring)
- 20: 2. Gußteil (Ventilgehäuse)
- 22: Feder
- 24: Absatz
- 25: Vorsprung
- 26: Schraube
- 28: Stahlring
- 30: Dichtung
- 31: umlaufende Nut
- 32: Dichtungspitze
- 34: Normkante
- 36: Befüllseite
- 38: Abgabeseite
- 40: Gewindestift
- x: Abstand Absatz zur Normkante

## Patentansprüche

1. Ventil, insbesondere für eine Vollschlauchkupplung, mit einem Gehäuse (2), einem Ventilschaft (6) und einem, mit einem umlaufenden Vorsprung (25) versehenen Ventilteller (4), wobei
- zwischen Ventilteller (4) und einem Absatz (24) des Gehäuses (2) eine ringförmige Dichtung (30) vorgesehen ist, die von einem Abdeckring (28) am Gehäuse gesichert ist,
- zur Festlegung einer definierten axialen Stellung des geschlossenen Ventils der radial gerichtete Vorsprung (25) des federbelasteten Ventiltellers (4) in Axialrichtung des geschlossenen Ventils auf dem Absatz (24) des Gehäuses aufliegt,
- die Dichtung (30) in einer umlaufenden stirnseitigen Nut (31) des Absatzes (24) angeordnet ist, und
- nur ein Teil (32) der Dichtung (30) mit dem bündig auf dem Gehäuseabsatz aufliegenden Vorsprung (25) des Ventiltellers (4) des geschlossenen Ventils in Kontakt kommt,
dadurch gekennzeichnet, daß
- die ebene Vorderseite des Ventiltellers (4) bündig mit einer Normkante (34) des Ventilgehäuses (2) abschließt,
- derjenige Teil (32) der Dichtung (30), der mit dem bündig auf dem Gehäuseabsatz aufliegenden Vorsprung (25) des Ventiltellers (4) des geschlossenen Ventils in Kontakt kommt und schmal gegenüber dem übrigen Teil der Dichtung ist, bei nicht geschlossenem Ventil über den Rand des Absatzes aus der Nut vorspringt, und daß
- die Nut (31) derart bemessen ist, daß eine Dehnungsmöglichkeit der Dichtung (30) aufgrund Quellung gegeben ist.

2. Ventil nach Anspruch 1, dadurch gekennzeichnet, daß der Abdeckring als Stahlring (28) ausgebildet ist und durch Schrauben (26) in Position gehalten ist.

3. Ventil nach Anspruch 1 oder 2, dadurch gekennzeichnet, daß eine gegen den Vorsprung des Ventiltellers gerichtete Spitze (32) der Dichtung (30) im entlasteten Zustand mit 5/10 ihrer Gesamthöhe aus der Nut (31) vorspringt.

4. Ventil nach einem oder mehreren der vorhergehenden Ansprüche, dadurch gekennzeichnet, daß das Ventilgehäuse (2) aus einem ersten und einem zweiten Gußteil (18, 20) besteht, die lösbar miteinander verbunden sind.

5. Ventil nach Anspruch 4, dadurch gekennzeichnet, daß die lösbare Verbindung der beiden Gußteile (18, 20) des Gehäuses (2) durch ein Gewinde gebildet ist.

6. Ventil nach Anspruch 4, dadurch gekennzeichnet, daß die lösbare Verbindung der beiden Gußteile (18, 20) durch eine Verschraubung (14) gebildet ist.

7. Ventil nach einem oder mehreren der vorhergehenden Ansprüche, dadurch gekennzeichnet, daß das Gehäuse (2) aus Aluminiumgußteilen (18, 20) besteht, daß der Ventilteller (4) ein Metallgußteil, insbesondere Aluminiumguß, ist und daß die Andruckfeder (22) und der Schaft (6) des Ventiltellers aus nichtrostendem Stahl bestehen.

## Claims

1. Valve, particularly for a solid hose coupling, comprising a casing (2), a valve stem (6) and a valve disc (4) provided with a circumferential projection (25), wherein
- between the valve disc (4) and a shoulder (24) of the casing (2) an annular seal (30) is provided, which is secured on the casing by a cover ring (28),
- for the purpose of fixing a defined axial position of the closed valve the radially directed projection (25) of the spring-loaded valve disc (4) lies on the shoulder (24) of the casing in the axial direction of the closed valve,
- the seal (30) is arranged in a circumferential groove (31) in the face of the shoulder (24), and
- only a part (32) of the seal (30) comes into contact with the projection (25), lying flush on the casing shoulder, of the valve disc (4) of the closed valve, characterized in that
- the flat front face of the valve disc (4) ends flush with a standard edge (34) of the valve casing (2),
- that part (32) of the seal (30) which comes into contact with the projection (25), lying flush on the casing shoulder, of the valve disc (4) of the closed valve, and which is narrow in relation to the remainder of the seal, projects out of the groove beyond the edge of the shoulder when the valve is not closed, and in that
- the groove (31) has dimensions such that the seal (30) is able to expand by swelling.

2. Valve according to Claim 1, characterized in that the cover ring is in the form of a steel ring (28) and is held in position by screws (26).

3. Valve according to Claim 1 or 2, characterized in that a tip (32), directed towards the projection of the valve disc, of the seal (30) projects out of the groove (31) by 5/10 of its total height in the unloaded state.

4. Valve according to one or more of the preceding claims, characterized in that the valve casing (2) consists of a first and a second casting (18, 20) which are detachably joined to one another.

5. Valve according to Claim 4, characterized in that the detachable connection of the two castings (18, 20) of the casing (2) is in the form of a screw thread.

6. Valve according to Claim 4, characterized in that the detachable connection of the two castings (18, 20) is in the form of a bolted connection (14).

7. Valve according to one or more of the preceding claims, characterized in that the casing (2) consists of aluminium castings (18, 20), in that the valve disc (4) is a metal casting, particularly an aluminium casting, and in that the pressure spring (22) and the stem (6) of the valve disc consist of stainless steel.

## Revendications

1. Soupape, en particulier pour un accouplement de tuyaux, comprenant une enveloppe (2), une tige de soupape (6) et une tête de soupape (4) pourvue d'une saillie circulaire (25), dans laquelle
- il est prévu, entre la tête de soupape (4) et un décrochement (24) de l'enveloppe (2), un joint d'étanchéité annulaire (30) qui est assujetti contre l'enveloppe par une bague de recouvrement (28),
- pour immobiliser une position axiale définie de la soupape fermée, la saillie radiale (25) de la tête de soupape (4) commandée par ressort est posée sur le décrochement (24) de l'enveloppe dans le sens axial de la soupape fermée,
- le joint d'étanchéité (30) est disposé dans une rainure frontale circulaire (31) du décrochement (24), et
- une partie seulement (32) du joint d'étanchéité (30) vient en contact avec la saillie (25), posée au ras du décrochement d'enveloppe, de la tête (4) de la soupape fermée,
caractérisée en ce que
- la face avant plane de la tête de soupape (4) affleure un bord normalisé (34) de l'enveloppe de soupape (2),
- la partie (32) du joint d'étanchéité (30) qui vient en contact avec la saillie (25), posée au ras du décrochement de l'enveloppe, de la tête (4) de la soupape fermée et qui est étroite par rapport au reste dudit joint dépasse de la rainure par rapport au bord du décrochement lorsque la soupape n'est pas fermée, et en ce que
- la rainure (31) est dimensionnée pour qu'il y ait une possibilité de dilatation du joint (30) en raison du gonflement.

2. Soupape selon la revendication 1, caractérisée en ce que la bague de recouvrement est conçue comme une bague en acier (28), et est maintenue en place par des vis (26).

3. Soupape selon la revendication 1 ou 2, caractérisée en ce qu'une pointe (32) du joint d'étanchéité (30) dirigée vers la saillie de la tête de soupape dépasse de la rainure (31) de 5/10 de sa hauteur totale, en position détendue.

4. Soupape selon l'une au moins des revendications précédentes, caractérisée en ce que l'enveloppe de soupape (2) se compose d'une première et d'une seconde pièce moulée en fonte (18, 20) qui sont reliées de façon amovible.

5. Soupape selon la revendication 4, caractérisée en ce que la liaison amovible entre les deux pièces moulées en fonte (18, 20) de l'enveloppe (2) est réalisée grâce à un filetage.

6. Soupape selon la revendication 4, caractérisée en ce que la liaison amovible entre les deux pièces moulées en fonte (18, 20) est réalisée grâce à un vissage (14).

7. Soupape selon l'une au moins des revendications précédentes, caractérisée en ce que l'enveloppe (2) se compose de pièces moulées en aluminium (18, 20), en ce que la tête de soupape (4) est une pièce moulée en métal, notamment en fonte d'aluminium, et en ce que le ressort de compression (22) et la tige (6) de la tête de soupape sont en acier inoxydable.
